Europäisches Patentamt

European Patent Office

Office européen des brevets

(19)

(11) Publication number: **0 454 850 A1**

## (12) EUROPEAN PATENT APPLICATION
### published in accordance with Art. 158(3) EPC

(21) Application number: 90910183.4

(22) Date of filing: 04.07.90

(86) International application number:
PCT/JP90/00861

(87) International publication number:
WO 91/07463 (30.05.91 91/12)

(51) Int. Cl.5: **C08L 23/26, C08L 29/04, C08L 51/00, C08L 77/00, B32B 27/30**

(30) Priority: 20.11.89 JP 301194/89
20.02.90 JP 414/89
20.03.90 JP 68163/90
03.04.90 JP 87413/90
03.04.90 JP 87414/90

(43) Date of publication of application:
06.11.91 Bulletin 91/45

(84) Designated Contracting States:
BE CH DE DK FR GB IT LI NL SE

(71) Applicant: SHOWA DENKO KABUSHIKI KAISHA
13-9, Shiba Daimon 1-chome
Minato-ku, Tokyo 105(JP)

Applicant: SHOWA HIGHPOLYMER CO., LTD.
No. 20, Kandanishiki-cho 3-chome
Chiyoda-ku
Tokyo(JP)

(72) Inventor: WATANABE, Kazuyuki Showa Denko K.K.
Oita Research Laboratory 2, Oaza Nakanosu
Oita-shi Oita-ken 870-01(JP)
Inventor: SAKAGUCHI, Fumio Showa

Highpolymer Co., Ltd.
3-20, Kanda Nishiki-cho Chiyoda-ku
Tokyo 101(JP)
Inventor: YAMADA, Hirokazu Showa Denko K.K.
Oita Research Laboratory 2, Oaza Nakanosu
Oita-shi Oita-ken 870-01(JP)
Inventor: KIRA, Koichi
Showa Denko K.K. Oita Works 2, Oaza Nakanosu
Oita-shi Oita-ken 870-01(JP)
Inventor: TANAKA, Yasuji Showa Denko K.K.
Oita Research Laboratory 2, Oaza Nakanosu
Oita-shi Oita-ken 870-01(JP)
Inventor: HARADA, Akio Showa Highpolymer Co., Ltd.
Osaka Laboratory 251-1, Ibonaka, Ibo-cho
Tatsuno-shi Hyogo-ken 679-41(JP)
Inventor: OKAMOTO, Takashi Showa Highpolymer Co., Ltd.
Osaka Laboratory 251-1, Ibonaka Ibo-cho
Tatsuno-shi Hyogo-ken 679-41(JP)

(74) Representative: Türk, Gille, Hrabal
Brucknerstrasse 20
W-4000 Düsseldorf 13(DE)

(54) **POLYVINYL ALCOHOL COPOLYMER RESIN COMPOSITION AND MULTILAYERED LAMINATE.**

(57) A resin composition comprising: (A) a polyvinyl alcohol copolymer resin having an ethylene content of 1 to 50 wt%, prepared by the emulsion polymerization of vinyl acetate and ethylene in the presence of polyvinyl alcohol in an amount of at least 10 wt% based on the total weight of the polyvinyl alcohol and the vinyl acetate, and (B) at least one member selected from among polyvinyl alcohol resin, polyamide resin, and saponified olefin-vinyl acetate copolymer. It is excellent in melt-moldability, melt-extrudability, gas barrier properties, and mechanical strengths. A multilayered laminate composed of at least one layer of the polyvinyl alcohol copolymer

resin as component (A) and at least one layer of a thermoplastic resin, wherein the copolymer resin layer serves as a heat-sealing layer; and another multilayered laminate composed of at least one layer of the polyvinyl alcohol copolymer resin and a 2 to 30 $\mu$m thick layer of a polyolefinic thermoplastic resin, alone or together with an adhesive layer, wherein the thermoplastic resin layer serves as a heat-sealing layer. These laminates are excellent particularly in the flavor barrier properties, so that they are suitably used for food packaging.

EP 0 454 850 A1

Technical Field

The present invention relates to a polyvinyl alcohol copolymer resin composition and a multi-laymer laminate, and more particularly to a polyvinyl alcohol copolymer resin composition which is excellent in melt fluidity, is melt extrusion moldable, can be melt molded without formation of pinholes, cracks, unevenness in thickness, etc., and which is useful as a molding material for moldings such as films, sheets, and containers, excellent in characteristics such as gas barrier properties, flavor barrier properties, heat sealability, mechanical strength, oil resistance, solvent resistance, antistatic properties, and flavor retaining properties, and a multi-layer laminate.

Background Art

Heretofore, a polyvinyl alcohol (herein-after sometimes abbreviated to "PVA") has been impossible to be melt extruded because its melting temperature and thermal decomposition temperature are very close. Moreover, a PVA film has a problem of losing flexibility, becoming brittle and easily breakable under low humidity, although it is soft and tough under high humidity.

As a method of solving the problem, there has been known a method in which $\alpha$-olefin and vinyl acetate is copolymerized and saponified. As a typical one, a saponified product of an ethylene-vinyl acetate copolymer (hereinafter sometimes abbreviated to "EVOH") is known.

Although EVOH is melt extrudable, it is much more expensive than PVA and under low humidity, it is inferior to PVA in gas barrier properties and impact resistance, thus being very brittle and breakable and, therefore, it is limited in its use.

Since PVA cannot be melt extruded, as a method of obtaining a film, for example, as described in Poval P-374: Polymer Publication Association (Published on April 25, 1984), a casting method in which PVA is dissolved with water and a plasticizer such as glycols, and extended on a drying drum or a belt through a slit, or it is coated with a roll coater and water is removed with a drum or a belt to thereby obtain a film, and a method in which PVA is impregnated with a plasticizer and a suitable of water and molded into pellets, and extruded by the use of an extrusion machine having special dissolving, kneading and defoaming units are employed. This extrusion is, as described in British Polymer Journal, Vol. 20, No. 4, p. 335 (1988), such that a PVA solution is continuously formed with a twin screw extruder, is introduced into a single screw extruder wherein it is measured under pressure while maintaining at a uniform temperature and filtered, and then is extruded through a flat die.

As described above, extruding of PVA needs a special extrusion machine, and needs a filtration step to remove a gel component, a step to dry water of the aqueous solution after molding, etc., and is very complicated. Accordingly, it is desired that this PVA can be easily melt extruded like thermoplastic resins.

As a method to permit melt extrusion of PVA and to prevent brittleness, for example, a method is known in which a plasticizer such as dipropylene glycol, triethylene glycol, diethylene glycol, or glycerine is added to PVA to lower the melting point and the flow initiation temperature. This method is described in detail in R.K. Tubbs, J. Polymer. Sci, A3, 4181 (1965) and Polymer Chemistry (Kobunshi Kagaku), Vol. 26, P118 (1969), etc.

However, in accordance with this method, the flow initiation temperature is effectively decreased, but gas barrier properties are decreased, the strength is generally decreased, it is liable to become soft upon absorption of water at high temperatures, and on the other hand, it tends to become hard and brittle at low temperatures. Moreover, there is a problem that if it is stored for a long time, a plasticizer bleeds to the surface of an extruded product, and so on.

In addition, a method in which melt extrusion is made possible by mixing EVOH with PVA (Japanese Patent Application Laid-Open No. 33945/1974), a method in which a saponified product of a copolymer of long chain $\alpha$-olefin having 5 to 30 carbon atoms and vinyl acetate, so-called modified PVA, is mixed with polymers except for polyolefin (Japanese Patent Application Laid-Open No. 117536/1974), a method in which bisphenols are mixed with modified PVA (Japanese Patent Application Laid-Open No. 123151/1975), a method in which a polyolefin resin is grafted to PVA, and this grafted product is mixed with PVA and a polyolefin resin to make melt extrusion possible (Japanese Patent Application Laid-Open No. 188488/1985), etc. are known.

These methods are all inferior in melt processability, uniform mixing properties, or gas barrier properties.

On the other hand, in order to improve impact resistance of EVOH, there has heretofore been known a method in which a polyamide resin having excellent impact strength is mixed with EVOH (Japanese Patent

3

Application Laid-Open Nos. 141785/1977, 154755/1983, 36412/1983, Japanese Patent Publication Nos. 24277/1969, 24813/1985, Japanese Patent Application Laid-Open No. 13449/1987, Japanese Patent Publication No. 22833/1983, Japanese Patent Application Laid Open Nos. 78750/1979, 225543/1987, etc.).

However, if a polyamide resin is mixed with EVOH, gel is produced during continuous melt extrusion, or at a screw or discharing part of an extrusion machine, a resin is deposited, producing an obstacle in melt extrusion and reducing physical properties of the extruded product.

As a method of solving the above problems, a method in which a polyamide resin having specified amounts of a terminal carboxyl group and a terminal amino group is mixed with EVOH is known (Japanese Patent Application Laid-Open Nos. 106944/1987, 22840/1987, etc.).

Although these methods are effective in improving melt processability, the composition obtained is inferior in gas barrier properties, is very expensive, and furthermore, because of high modulus of elasticity, is limited in its use.

On the other hand, a polyamide resin is generally tough, and an impact strength which is one of ratings of toughness is markedly increased by absorption of moisture. Just after molding, and in a dry state or at low temperatures in the winter season, the impact strength is not always sufficiently high, and cracks are often produced in the molding.

As a method of improving impact resistance, a method in which a polyamide resin is blended with an $\alpha$, $\beta$-unsaturatedcarboxylic acid or its ester copolymer resin of polyolefin, a resin obtained by graft modification of $\alpha$, $\beta$-unsaturated carboxylic acid exemplified by maleic anhydride onto a polyolefin resin, or an ionomier resin obtained by ionization of an ethylene/methacrylic acid (ester) copolymer with Na, Zn, Mg, etc., and rubber obtained by graft modification of an ethylene-propylene-diene copolymer rubber with maleic anhydride (Japanese Patent Application Laid-Open No. 70254/1976, Japanese Patent Publication Nos. 12546/1967, 29262/1969, U.S. Patent 3,845,163, Japanese Patent Publication No. 44108/1979, and Japanese Patent Publication No. 97711/1980) is known.

This method, however, has problems such as (1) compatibility with a polyamide resin is poor, (2) in graft modification, a gel portion is produced by an organic peroxide, (3) if an unreacted monomer is present in a polymer, it reacts with a polyamide resin, producing a large amount of gel and coloring in yellow, and (4) gas barrier properties are reduced by blending. Moreover, the ionomer and the like, in blending, suffer from a problem that it is limited in use, because the ionomer itself is expensive.

In addition, there is so-called amorphous nylon in which the glass transition point is increased by introducing a side chain or a ring structure to prevent crystallization of polyamide, but although impact resistance is improved, there are problems that the molding temperature is generally high, a special molding unit is needed, leading to an increase in production costs. An example of such amorphous nylon is described in detail in Polyamide Resin Handbook, p. 287-306, Nikkan Kogyo Shinbunsha (published on January 30, 1988).

As described above, in the conventional prior art techniques, there are bleeding of the plasticizer, a decrease in gas barrier properties, no possibility in melt processability, and ununiform mixing.

EVOH is used as a food packaging material, a cosmetic packaging material, a medicine packaging material, etc., particularly as a packaging material for food and medicine which needs shieldability against oxygen, making the best use of gas barrier properties which are characteristics thereof.

However, EVOH is hard, very brittle, easily breakable, and contains a hydroxyl group in the molecule thereof and, therefore, is sensitive to water and steam, and has a disadvantage that gas barrier properties are markedly reduced by moisture absorption.

In order to overcome the above disadvantage, there is used a multi-layer laminate in which a polyolefin polymer such as polyethylene, polypropylene, etc., or one or more of polyester, polystyrene, polyvinyl chloride, and the like is laminated on EVOH.

As these limination methods, it is obtained in a form of sheet, film or bottle by a so-called coextrusion method in which a polyolefin, EVOH and their adhesive resin are extruded from the respective extruders and laminated, and a dry lamination method, an extrusion lamination method, a solution coating method, and the like.

In connection with sheet, to make a packaging container, the EVOH multi-layer laminate is subjected to fabrication of thermo-forming such as vacuum-forming and pressure-forming.

In most of these methods, it is necessary that molding be carried out under molding conditions suitable for a resin having the lowest melting point among the materials constituting the multi-layer laminate. Accordingly, in EVOH having a high melting point, fine empty portions (so-called voids) and cracks are produced in the layer thereof by fabrication. Moreover, because of high crystallization speed of EVOH, such voids and cracks, and unevenness in thickness at local positions, and so forth are produced. Particularly in deep draw forming, such phenomenon is liable to occur at the corner and the like when the deep draw ratio is high, and thus it is limited in use.

On the other hand, also in blow molding, namely in molding in a form of bottle by expanding a parison, the above phenomenon is liable to occur.

Moreover, in a film, pinholes are readily formed by bending during the transportation step, and gas barrier properties of EVOH are sometimes markedly reduced

If such cracks, pinholes, unevenness in thickness, etc. are produced, oxygen barrier properties are markedly reduced, poor appearance and peeling between layers of an adhesive resin and EVOH occur, and the use as a packaging container is limited, or difficulties are encountered in its use.

As a method of overcoming the above problem, a method in which EVOH is mixed with glycerine, various glycols, and a hydroxyl group-containing plasticizer (Japanese patent Application Laid-Open No. 88067/1978), EVOH copolymerized with a pyrrolidone ring (Japanese Patent Application Laid-Open 11644/1987), a method in which silane cross-linking is applied to EVOH (Japanese Patent Application Laid-Open Nos. 20946/1976, 144304/1985, 170672/1985, 290047/1986, and 290048/1986), a method in which EVOH is blended with lithium chloride and aromatic or aliphatic amide or polyhydric alcohol compound (Japanese Patent Application Laid-Open Nos. 281147/1986, 283643/1986, and 283644/1986), etc. are known.

However, these methods are all not sufficiently satisfactory because they have problems as described below. That is, since glycerine, various glycols, and a hydroxyl group-containing plasticer are poor in compatibility with EVOH, with a lapse of time, bleeding of these plasticers occurs, and there is a problem that the adhesion strength to the adhesive resin layer is decreased with a lapse of time.

In the tertiary copolymer copolymerized with a pyrrolidine ring in the molecule thereof, it absorbes moisture more easily than EVOH, and an effect of preventing pinholes, cracks, and unevenness in thickness is still unsatisfactory. A method in which silane cross-linking is applied to EVOH is difficult in controlling the cross-linking, and often at the time of melt molding, a lot of gel and fish eye are produced.

On the other hand, a method in which a lithium chloride compound and an aromatic or aliphatic amide or a polyhydric alcohol compound is blended with EVOH had problems in that the lithium chloride compound often causes poor dispersion in blending with EVOH, and in heat stretching such as molding of a container using an original sheet and also in obtaining a stretched film, a lithium chloride particle portion produces voids as a result of stretching thereof, producing reversely cracks and pinholes, and has been still unsatisfactory.

In addition, for the purpose of increasing flexural fatigue resistance and mechanical strength, it was conducted to increase the ethylene content of EVOH. In accordance with this method, however, an increase in the ethylene content reversely decreases gas barrier properties, and the method was limited in use.

Accordingly, in heat molding of containers using an EVOH multi-layer laminate, there has been desired EVOH which provides an EVOH layer free from formation of pinholes, cracks and unevenness in thickness, and which is excellent in gas barrier properties.

When a multi-layer laminate is used as a packaging material for food, it is required to have flavor retaining property which is one of the important product values of good. This food flavor (hereinafter referred to as "flavor") comprises organic compounds having various numbers of carbon atoms. The flavor component includes, for example, terpene-based hydrocarbons (d-limonene, myrcene, etc.), terpene alcohols (α-terpineol, linalol, geraniol, etc.), alcohols (octanol, isoamyl alcohol, etc.), aldehydes (octanal, citral, trans-2-hexanal, etc.), esters (ethyl caprate, amyl benzoate, ethyl cinnamate, etc.), and the like.

A multi-layer laminate for packaging of food to store these flavors is generally obtained by laminating a heat sealable polyolefinic resin layer as an inner layer, EVOH, a polyvinylidene chloride copolymer, or a gas barrier resin such as a polyamide resin, or a metal foil such as an aluminum foil as a gas barrier layer in the intermediate, and outside thereof as a supporting layer or protective layer, a thermoplastic resin layer of a polyolefin resin, a polyester resin, a vinyl chloride resin, a polystyrene resin, and the like. Lamination of each layer is generally carried out through an adhesive layer.

For a heat seal layer to be widely utilized for automation and effeciency of packaging, a polyolefin resin is almost monopolistically used. However, since a polyolefinic thermoplastic resin as a heat seal layer at the inner side does not have affinity to a gas barrier resin and a metal foil, there is a problem in adhesive properties. This can be easily supposed, because a polyolefinic thermoplastic resin exemplified by polyethylene, polypropylene and the like is of non-polarity.

Accordingly, in general, a dry lamination method in which lamination is carried out through an adhesive such as polyester, poly acrylate, or polyurethane-adhesives; a method in which a multi-layer laminate is obtained by a multi-layer coextrusion method using, as an adhesive layer, a so-called modified polyolefinic resin which is obtained by a method in which a polyolefinic resin is melt-grafted and extruded along with unsaturated carboxylic anhydride with an organic peroxide as a catalyst, or a method in which the polyolefinic resin is dissolved in heated xylene and unsaturated carboxylic anhydride is grafted with an organic peroxide, and so forth, and so forth usually depend on an adhesive.

By the way, food contains flavor which is one element of taste. The flavor comprises various organic compound components as described above which are contained in the food. The flavor characteristic of the food is formed by a balance in vapor density of these small amounts of organic compound components. However, since a polyolefinic resin as a heat seal layer coming into direct contact with the food absorbs a considerably large amount of flavor contained in the food, it is desired to decrease the thickness of the heat seal layer. However, if the heat seal layer is used in a small thickness, breakage of the heat seal layer is liable to occur.

In connection with a relation between flavor retaining properties and a polymer, it is described in Watanabe et al.; Nippon Shokuhin Kogyo Gakkaishi, Vol. 10, No. 4, page 118 (1963), a separate volume, Shokuhin Kogyo; Shokuhin no Hoso to Zairyou, Korin (1979), Shigeyuki Harita, Japan Food Science, March, page 49 (1987), PRECEDING OF FUTURE-PAK '87 (RYDER ASSOCIATES INC.), November, page 9 (1987), etc.

In connection with conventional techniques concerning flavor retaining properties, a method in which at least one of EVOH and Nylon is used as the innermost layer in contact with contents (Japanese Patent Application Laid-Open Nos. 163654/1982 and 48344/1985), a method in which a mixture of polyester and polyamide is used as the innermost layer (Japanese Patent Application Laid-Open No. 64449/1986), a method in which food flavor is kneaded into a resin constituting the innermost layer (Japanese Patent Application Laid-Open Nos. 174348/1984 and 174470/1984), a method in which a mixture of polyesters having different molecular weights is used as an inner layer material (Japanese Patent Application Laid-Open No. 163654/1982), etc. are known.

In addition, a paper board in which EVOH is used as the innermost layer in contact with the contents (Japanese Patent Application Laid-Open No. 3950/1988), a paper board in which heat sealable glycol-modified polyethylene glycol is used as the innermost layer in contact with the contents (Japanese Patent Application Laid-Open No. 290534/1987), a method in which the thickness of a polyolefin layer and EVOH laminated thereonto through an adhesive layer and constituting the innermost layer is set to 5 to 40 $\mu$m (Japanese Utility Model Application Laid-Open No. 21031/1988), a method in which a polyolefin resin is used as the innermost layer and the amount of the polyolefin resin is controlled to not more than 0.5% based on the amount 100% (weight) of the food to be charged (Japanese Patent Application Laid-Open No. 268640/1987), and so on have been proposed.

However, these methods have a problem that heat sealability is poor, because the resin to be used as the innermost layer has a higher melting point than the polyolefin resin, and have a problem that heat deterioration is caused when food spices are kneaded into the innermost layer, because the kneading temperature in kneading spices is high, and have a problem that even though heat sealing can be carried out, the heat sealed portion is easily broken, because the heat sealing performance is poor. In order to control the amount of the polyolefin to not more than 0.5% based on the amount 100% (by weight) of the charged food as in Japanese Patent Application Laid-Open No. 268640/1987, it is necessary to decrease the thickness of low density polyethylene to as thin as 10 $\mu$m. At the time of heat sealing, an outer layer composed of a resin having a higher melting point than the low density polyethylene is not melted, and thus problems such as poor heat sealed strength and breakage are encountered. Thus it cannot be said that any of the methods can solve the problems.

Some of them are effective in the case of large volume charged food, bur in the case of small volume charged food, there are limitations that the thickness of polyolefin is inevitably decreased, or the size of the container is decreased. Thus they are limited in commercial use.

In addition, in the technique that the conventional gas barrier resin is used as the innermost layer, although flavor barrier properties are better than those of the polyolefin resin, heat sealability is inferior to that of the polyolefinic resin, and thus there are problems in respect of workability or processability and quality maintenance.

For example, in connection with flavor barrier properties, EVOH is the best, but since EVOH has a higher heat melting temperature than the polyolefinic resin, the heat sealing temperature is high and moreover it lacks toughness. Thus the heat seal strength is poor.

As a method of solving the problem, there is a method in which EVOH having a high ethylene content is used. With an increase in the ethylene content, although heat sealability is somewhat increased, flavor barrier properties are reversely deteriorated. Thus mutually contradictory problems of heat sealability and flavor barrier properties could not be solved at the same time.

The present invention has been accomplished under the above circumstances. Its object is to provide a polyvinyl alcohol copolymer resin composition which overcomes the aforementioned problems, is excellent in melt fluidity, is melt extrusion processable, and which is useful as an extruding or a molding material for extruded or molded products such as a film, a sheet, a multi-layer laminate and a container, excellent in various properties such as gas barrier properties, mechanical strength, oil resistance, solvent resistance, antistatic properties, and flavor retaining properteis.

The present invention is further intended to provide a multi-layer laminate which is free from pinholes, cracks and unevenness in thickness, is excellent in flexural fatigue properties and heat sealability, and further is excellent in various performances such as flavor barrier properties, gas barrier properties, and mechanical strength.

Disclosure of Invention

The present inventors made intensive investigations to solve the above problems. As a result, they have found that the above objects can be attained by using a polyvinyl alcohol copolymer resin which is obtained by emulsion polymerizing a vinyl acetate monomer and an ethylene monomer in the presence of a specified proportion of polyvinyl alcohol. The present invention has been completed based on the above findings.

That is, the present invention provides a resin composition comprising:

(A) a polyvinyl alcohol copolymer resin having an ethylene content of 1 to 50% by weight, which is obtained by emulsion polymerization of a vinyl acetate monomer and an ethylene monomer in the state that polyvinyl alcohol is present in an amount of at least 10% by weight based on the total weight of the polyvinyl alcohol and vinyl acetate monomer; and

(B) any one of a polyvinyl alcohol resin, a polyamide resin, and an olefin-vinyl acetate copolymer saponified product.

The present invention further provides a multi-layer laminate comprising at least one layer of a polyvinyl alcohol copolymer resin having an ethylene content of 1 to 50% by weight, as obtained by emulsion polymerization of a vinyl acetate monomer and an ethylene monomer in the state that polyvinyl alcohol is present in an amount of at least 10% by weight based on the total weight of polyvinyl alcohol and vinyl acetate monomer, and at least one thermoplastic resin layer laminated thereon wherein the above polyvinyl alcohol copolymer resin layer is a heat sealing layer, and a multi-layer laminate comprising at least one layer of the above polyvinyl alcohol copolymer resin, and a 2 $\mu$m to 30 $\mu$m thick polyolefinic thermoplastic resin layer, or an adhesive layer and a polyolefinic thermoplastic resin layer laminated thereon in an adjacent position thereto wherein the polyolefinic thermoplastic resin layer is a heat sealing layer.

Best Mode for Carrying Out the Invention

First the polyvinyl alcohol copolymer resin to be used as the component (A) in the resin composition of the present invention will be explained. This polyvinyl alcohol copolymer resin is obtained by emulsion polymerization of a vinyl acetate monomer and an ethylene monomer in the state that polyvinyl alcohol is present in an amount of at least 10% by weight based on the total amount of the polyvinyl alcohol and the vinyl acetate monomer, and has an ethylene content of 1 to 50% by weight.

This polyvinyl alcohol copolymer resin can be produced by, for example, the methods described in Japanese Patent Application Laid-Open Nos. 96637/1985 and 108016/1988, etc.

In accordance with one example of the methods for production of the polyvinyl alcohol copolymer resin, it is obtained by copolymerizing a vinyl acetate monomer and an ethylene monomer by the use of a known catalyst in the presence polyvinyl alcohol having an average degree of polymerization of 20 to 5,000. The polyvinyl alcohol to be used herein is obtained by saponifying polyvinyl acetate. The degree of hydrolysis is not critical. Those having a mean degree of saponification of 50 to 99 mol% are preferred. Those having a degree of saponification of 70 to 99 mol% and a mean degree fo polymerization of 100 to 3,000 are more preferred. In particular, those having a mean degree of saponification of 78 to 99 mol% and a mean degree of polymerization of up to 2,500 are most suitable. As the degree of saponification of the polyvinyl alcohol is higher, oxygen barrier properties are better, but in some cases the viscosity of a solution at the time of polymerization is increased, and mutual solubility in mixing the emulsion polymer with other resins is inferior. Accordingly, in particular, a 78 to 99 mol% saponified product is most suitable.

As the degree of polymerization of the polyvinyl alcohol to be used in the emulsion polymerisation is higher, the strength of a molded or an extruded product obtained from the resulting resin composition is higher, but melt extrusion processability is reduced. Accordingly, depending on the use, it is preferred to choose and use polyvinyl alcohol having a degree of polymerization of 300 to 2,500 and particularly preferably 300 to 1,500.

The amount of the polyvinyl alcohol present in the aqueous emulsion during the copolymerization of the vinyl acetate monomer and the ethylene monomer is necessary to be at least 10% by weight based on the total weight of the vinyl acetate monomer and the polyvinyl alcohol. If it is less than 10% by weight, there are such inconveniences that gas barrier properties are poor, mutual solubility with other resins to be compounded in preparation of the molding material is poor, and the surface of the molded or extruded product becomes sticky. Thus the resulting product is unsuitable for the object of the present invention. In order to keep melt processability without reduction of gas barrier properties, it is preferred that the amount of the polyvinyl alcohol to be present during the emulsion polymerization be adjusted to 10 to 60% by weight.

The emulsion polymerization of ethylene and vinyl acetate is carried out after sealing ethylene and increasing the pressure. The pressure is usually 5 to 100 kg/cm$^2$. The ethylene and vinyl acetate, and the ethylene content during the emulsion can be changed over a relatively wide range by controlling the ethylene pressure during the polymerization.

The ethylene content of the polyvinyl alcohol copolymer resin produced by the above method is 1 to 50% by weight and preferably 10 to 45% by weight. If the ethylene content is more than 50% by weight, mutual solubility with other resins, gas barrier properties, and so on are poor, which are unsuitable for the object of the present invention. If it is less than 1% by weight, melt processability is poor, and the product cannot be used.

In connection with the content of the vinyl acetate unit in the polyvinyl alcohol copolymer resin, there are not special limitations, and usually it is 1 to 89% by weight. If it is less than 1% by weight, melt processability is reduced. If it is more than 89% by weight, there occur problems that mutual solubility with other resins is poor and the surface of the molded or extruded product becomes sticky.

In the above polyvinyl alcohol copolymer resin, in place of or in addition to the vinyl acetate monomer and the ethylene monomer, other monomers having an ethylenically unsaturated bond can be copolymerized. Examples of these monomers are unsaturated acids such as acrylic acid, methacrylic acid, crotonic acid, maleic acid, fumaric acid, itaconic acid and the like, or its alkyl esters, unsaturated carboxylic acid amides such as acrylamide, methacrylamide, N-methylolacrylamide and the like, functional group monomers such as styrene, acrylonitrile, or 2-hydroxyethyl acrylate, 2-hydroxyethyl methacrylate, glycidyl methacrylate, and the like, and moreover $\alpha$-olefins such as propylene, butene, decene, octadecene, and the like, vinyl esters such as vinyl propionate, vinyl butyrate, vinyl pivalate, vinyl laurate, vinyl barsatite, and the like, and vinyl halide such as vinyl chloride, vinyl fluoride, and the like.

As the polymerization catalyst, persulfate, hydrogen peroxide, tert-butylhydroperoxide, and redoxes with reducing agents to be used in the usual emulsion polymerization can be used. If necessary, a surfactant can be used.

The polyvinyl alcohol copolymer resin of the present invention as obtained above is excellent in various performances such as gas barrier properteis, flavor barrier properties, mechanical strength, and heat sealability.

Next the resin composition of the present invention further contains as the component (B) any one of a polyvinyl alcohol resin (PVA resin), a polyamide resin, and an olefin-vinyl acetate copolymer saponified product.

The polyvinyl alcohol resin (PVA resin) to be used as the component (B) refers to a partially or completely saponified product of polyvinyl acetate, or its modified polyvinyl alcohol resin.

As the polymerization method of polyvinyl acetate, there are bulk polymerization, solution polymerization, emulsion polymerization, and suspension polymerization.

Of these, the bulk polymerization have problems of an increase in viscosity at the time of polymerization, attachment of the polymer to a reactor, a difficulty in removal of polymerization heat.

In connection with emulsion polymerization, the resulting liquid fron the emulsion polymerization can be used as a starting material for an adhesive and a paint as it is, but this method is not always suitable as a method of production of polyvinyl acetate.

The suspension polymerization has problems in that controlling polymerisation conditions is difficult.

Accordingly, solution polymerization as described below is generally employed as a method of production of polyvinyl acetate. As this solution polymerization, there is employed a method in which an acetic acid monomer is diluted with a solvent such as methanol, ethanol and methyl acetate while at the same time a catalyst is added to cause polymerization, and polymerization heat is removed by evaporation heat of the solvent.

The solution polymerization is easy to stir, because the viscosity is low, and the removal of the polymerization heat becomes easy. This polymerization is usually carried out by a method using an initiator which is decomposed by heat.

In addition, there are polymerization using ultraviolet rays, polymerization using radiations such as γ-rays, and low temperature polymerization using a redox catalyst.

As the heat decomposable initiator, benzoyl peroxide (BPO), azobisisobutylonitrile (AIBN), and the like are usually used.

By saponifying the polyvinyl acetate thus obtained by the use of an alkali catalyst or an acid catalyst, PVA to be used as the component (B) of the present invention can be obtained.

The modified PVA refers to a partially or completely saponified product of copolymer as described below. Examples are a copolymer of vinyl acetate and olefin having 4 to 18 carbon atoms, a copolymer of vinyl acetate and vinyl carboxylate (vinyl barsatate, vinyl stearate, etc.), a copolymer of vinyl acetate and alkyl vinyl ether (lauryl vinyl ether, methyl vinyl ether, etc.), a copolymer of vinyl acetate and (meth)acrylate (methyl methacrylate, etc.), a copolymer of vinyl acetate and acrylamide (acrylamide; methacrylamide; N,N-dimethylacrylamide, etc.), a copolymer of vinyl acetate and unsaturated carboxylic acid or its anhydride or ester (acrylic acid, crotonic aoid, maleic acid, fumaric acid, itaconic acid, etc.), a copolymer of vinyl acetate and a sulfonic acid monomer (vinylsulfonic acid, acrylsulfonic acid, etc.), a copolymer of vinyl acetate and a cationic monomer (dimethylaminoethyl methacrylate, vinyl imidadole, vinylpyridine, vinylsuccimide, etc.), a copolymer of vinyl acetate and other monomer (vinylene carbonate, allyl alcohol, allyl acetate, etc.), and the like.

The PVA thus obtained comprises a vinyl alcohol unit and a vinyl acetate unit. Its degree of polymerization is not critical and can be chosen appropriately depending on the use and so on. Usually those having a degree of polymerization of 50 to 2,500 are preferred. Particularly, taking into consideration melt fluidity and mechanical strength, those having a degree of polymerization of 200 to 1,800 are preferred. On the other hand, the degree of saponification is preferably at least 50 mol%, and taking into consideration melt fluidity, those having a degree of saponification of 70 to 99.5 mol% are preferred. If the degree of saponification is less than 50 mol%, there is a disadvantage that the mechanical strength is poor.

As one embodiment in the case that PVA is used as the component (B) in the resin composition of the present invention, it is preferred that the polyvinyl alcohol copolymer resin emulsion as obtained by emulsion polymerization of a vinyl acetate monomer and an ethylene monomer in the state that polyvinyl alcohol is present in an amount of 10 to less than 15% by weight based on the total weight of polyvinyl alcohol and the vinyl acetate monomer, and PVA in an aqueous solution state are compounded so that the total weight of polyvinyl alcohol and groups derived from polyvinyl alcohol (hereinafter referred to as a polyvinyl alcohol group) is at least 15% by weight based on the total weight of vinyl alcohol unit and vinyl acetate unit. In this case, since the amount of polyvinyl alcohol at the time of emulsion polymerization is small, removal of the reaction heat can be easily carried out, an the emulsion concentration can be increased, and furthermore by mixing PVA, high oxygen barrier properties can be attained. In addition, the resin composition can be obtained by mixing the polyvinyl alcohol copolymer resin emulsion (A) and the aqueous polyvinyl alcohol solution (B) and removing a resin solid from the emulsion resin composition. In accordance with this, more uniform mixing is attained, and there can be obtained the resin composition in which the components are uniformly dispersed.

In the resin composition of the present invention, the compounding ratio of the polyvinyl alcohol copolymer resin as the component (A) and the PVA as the component (B) is such that the polyvinyl alcohol copolymer resin is 5 to 95% by weight and PVA is 95 to 5% by weight, and preferably the polyvinyl alcohol copolymer resin is 10 to 85% by weight and PVA is 90 to 15% by weight. In the composition of the present invention, when PVA having a particularly low degree of polymerization is used, as the compounding ratio of PVA is higher, melt fluidity tends to be more improved.

If the compounding ratio of the polyvinyl alcohol copolymer resin is more than 95% by weight, melt processability is sometimes limited because of excessive melt fluidity. On the other hand, if it is less than 5% by weight, when PVA having a high degree of saponification is mixed, melt extrusion properties are not exhibited, and it cannot be used.

In accordance with the present invention, the polyvinyl alcohol copolymer resin as the componenet (A) is compounded in a range of 5 to 95% by weight to a polyvinyl alcohol (PVA) which has heretofore been impossible to be melt extruded, whereby the resulting composition becomes possible to be melt extruded and to melt flow. Within a range that the compounding ratio of the PVA is large, although the reason why melt fluidity is excellent is not clear, it is considered that by the mutual action when PVA and the polyvinyl alcohol copolymer resin are mixed, PVA itself becomes to melt flow and melt processing becomes possible.

Although the reason why an emulsion resin composition obtained by mixing a polyvinyl alcohol copolymer resin emulsion as described above with polyvinyl alcohol in an aqueous solution state, as one embodiment of the resin composition of the present invention, is excellent in oxygen barrier properties and in melt extrusion processability is not clear, it is assumed that in an interface between polyvinyl alcohol and

EP 0 454 850 A1

a polyvinyl alcohol copolymer resin, polyvinyl alcohol with ethylene and vinyl acetate grafted thereon is formed at the time of melt drying, and thus mutual compatibilization is caused.

If there is the above assumed ethylene-vinyl acetate grafted polyvinyl alcohol, even if an aqueous polyvinyl alcohol solution is mixed, no reduction in oxygen barrier properties is caused and rather oxygen barrier properties are improved and melt processability is considered to be within a practical range.

The emulsion resin composition obtained by mixing the polyvinyl alcohol copolymer resin emulsion as the component (A) and polyvinyl alcohol in an aqueous solution condition can be used as a base for a paint for emulsion coating as it is and when coated and dried, can form a clear hermetic film having oxygen barrier properties. Thus the composition can be used as a processing agent to impart oxygen barrier properties to a synthetic resin film, paper, cloth and so on.

As polyamide resins which can be used as the component (B) in the resin composition of the present invention, various ones can be used. For example, polyamide resins which are polycondensates of lactam, $\epsilon$-aminoacid and dibasic acid and diamine can be used. More specifically, polymers of $\epsilon$-caprolactam, aminolactam, enatolactam, 11-aminoundecanic acid, 7-aminoheptanic acid, 9-aminononanic acid, $\alpha$-pyrrolidone, $\alpha$-piperidone, etc., and polycondensates or copolymers of diamines such as hexamethylenediamine, nonamethylenediamine, undecamethylenediamine, dodecamethylenedimaine, methaxylylenediamine and the like and dicarboxylic acids, such as terephthalic acid, isophthalic acid, adipic acid, sebacic acid, dodecane dicarboxylic acid, glutaric acid and the like can be used. More specifically, Nylon 4, Nylon 6, Nylon 7, Nylon 8, Nylon 11, Nylon 12, Nylon 6.6, Nylon 6.9, Nylon 6.10, Nylon 6.11, Nylon 6.12, Nylon MXD and the like can be used.

In the resin composition of the present invention, when a polyamide resin is used as the component (B), the compounding ratio of the polyvinyl alcohol copolymer resin as the component (A) to the polyamide resin as the component (B) is such that the polyvinyl alcohol copolymer resin is 5 to 95% by weight and the polyamide resin is 95 to 5% by weight, and preferably the polyvinyl alcohol copolymer resin is 10 to 85% by weight and the polyamide resin is 90 to 5% by weight. If the component (A) is less than 5% by weight, gas barrier properties are not sufficiently exhibited and the objects of the present invention cannot be attained.

By compounding the polyvinyl alcohol copolymer resin to the polyamide resin having insufficient gas barrier properties in an amount not less than a certain ratio, the resulting composition becomes suitable for melt extrusion processing and at the same time, it becomes to have excellent gas barrier properties and mechanical strength. Although the reason is not clear, it is assumed that the mutual action when the polyamide resin and the polyvinyl alcohol copolymer resin are mixed overcomes the disadvantages of the partner without deteriorating the characteristics inherent to each of the resins.

Moreover, as the component (B) in the resin composition of the present invention, an olefin-vinyl acetate copolymer saponified product can be used. This olefin-vinyl acetate copolymer saponified product refers to a partially or fully saponified product of a copolymer of various olefins such as ethylene, propylene, butene-1 and the like, and vinyl acetate. For example, a saponified product of an ethylene-vinyl acetate copolymer and a saponified product of a propylene-vinyl acetate copolymer are included. Particularly an ethylene-vinyl acetate copolymer saponified product (EVOH) is preferred from a viewpoint of ease of polymerization. There are various types of EVOHs, of which those having the composition that the ethylene content is 15 to 60 mol% and the degree of saponification is at least 90 mol% are suitably used. If the ethylene content is less than 15 mol%, melt processability is reduced, and if the degree of saponification of the vinyl acetate component is less than 90 mol%, gas barrier properties are sometimes decreased. Particularly preferred are EVOHs in which the ethylene content is 25 to 50 mol% and the degree of saponification is at least 96 mol%. As well as ethylene and vinyl acetate (or vinyl alcohol resulting from saponification thereof), it may contain small amounts of unsaturated acids such as acrylic acid, methacrylic acid, crotonic acid, maleic acid and the like, or their alkyl esters, or further $\alpha$-olefins such as propylene, butene, $\alpha$-decene, $\alpha$-octadenene and the like as comonomers.

In the resin composition of the present invention, when the olefin-vinyl acetate copolymer saponified product is used as the component (B), the compounding ratio of the polyvinyl alcohol copolymer resin as the component (A) to the olefin-vinyl acetate copolymer saponified product as the component (B) is such that the polyvinyl alcohol copolymer resin is 5 to 95% by weight and the olefin-vinyl acetate copolymer saponified product is 95 to 5% by weight, and preferably the polyvinyl alcohol copolymer resin is 10 to 85% by weight and the olefin-vinyl acetate copolymer resin saponified product is 90 to 15% by weight. If the component (A) is less than 5% by weight, the effect of preventing pinholes, cracks and unevenness in thickness and that of improving heat stretching properties and the like are not exhibited, making it unsuitable for practical use.

By compounding the polyvinyl alcohol copolymer resin to the olefin-vinyl acetate copolymer saponified product in which pinholes, cracks, unevenness in thickness and the like are readily produced in molding of containers and the like as mentioned above, in a specified ratio, the resulting composition becomes free from pinholes, cracks, unevenness in thickness and the like in molding. Furthermore, containers and the like produced are excellent in barrier properties.

Although the reason why the prior art problems can be overcome is not clear, it is considered that since the polyvinyl alcohol copolymer resin to be mixed with the olefin-vinyl acetate copolymer saponified product has high flexibility and furthermore is excellent in gas barrier properties and in compatibility with the olefin-vinyl acetate copolymer saponified product, the disadvantages of the olefin-vinyl acetate copolymer saponified product can be overcome without reducing gas barrier properties inherent to the olefin-vinyl acetate copolymer saponified product.

The melt index (MFR, measured at a load of 2.16 kg and a temperature of 230°C according to JIS-K-6758) of the composition of the present invention is not critical and can be chosen appropriately depending on the method of processing. In extrusion processing, it is suitable to be within the range of 0.1 to 50 g/10 min.

The resin composition of the present invention basically comprises the aforementioned component (A) and component (B). In addition, if necessary, other resins or various additives and the like can be compounded in suitable amounts within the range such that the objects of the present invention are not deteriorated.

To the resin composition of the present invention, other additives commonly used in the thermoplastic resin can be compounded. In connection with examples of such additives, the antioxidant includes 2,5-di-t-butylhydroquinone; 2,6-di-t-butyl-p-cresol; 4,4'-thiobis-(6-t-butylphenol); 2,2-methylene-bis(4-methyl-6-t-butylphenol); octadecyl3-(3',5'-di-t-butyl-1'-hydroxyphenyl)propionate; 4,4'-thiobis-(6-butylphenol) and the like, the ultraviolet absorbing agent includes ethyl-2-cyano-3,3-diphenyl acrylate; 2-(2'-hydroxy-5-methylphenyl)benzotriazole; 2-hydroxy-4-octoxybenzophenone and the like, the plasticizer includes dimethyl phthalate; glycerine; dipropylene glycol; triethylene glycol; diethylene glycol diethyl phthalate; wax; fluid paraffin; phosphoric acid ester, the antistatic agent includes monostearate; sorbitan monplamitate; sulfated olefinic acid; polyethylene oxide; carbon wax; the lubricant includes ethylenebisstearoamide, butyl stearate and the like, the colorant includes carbon black; phthalocyanine; quinacridone; indoline; azo-based pigments; titanium oxide; iron oxide red and the like, the filler includes glass fiber; asbestos; mica; ballastnite; calcium silicate; aluminum silicate; calcium carbonate and the like. In addition, many other polymer compounds can be blended to an extent such as not to deteriorate the effects of the present invention.

A method for blending for production of the composition of the present invention is not critical, but it is preferred that the components (A) and (B) and other components to be added if necessary are supplied to a ribbon blender, a high speed mixer, a kneader, a pelletizer, a mixing roll or the like, and pelletized and dried. Moreover each component may be supplied directly to the molding machine and molded.

The composition of the present invention can be extruded or molded into a film, a sheet, a tube, a bottle and the like by the known melt molding method, melt extrusion method, and compressing molding method.

The present invention further provides a multi-layer laminate comprising at least one layer of the aforementioned polyvinyl alcohol copolymer resin, at least one thermoplastic resin laminated, and having a polyvinyl alcohol copolymer resin layer as a heat seal layer.

The polyvinyl alcohol copolymer resin to be used in the heat-sealable multi-layer laminate is the same as the polyvinyl alcohol copolymer resin as explained as the component (A) for the resin composition of the present invention. During polymerization of vinyl acetate and ethylene for the production of the resin, the amount of polyvinyl alcohol existing in the aqueous emulsion is at least 10% by weight, preferably 10 to 60% by weight based on the total weight of vinyl acetate and polyvinyl alcohol. If it is less than 10% by weight, adsorption of a flavor component is increased, unsuitably for the objects of the present invention. The ethylene content of the polyvinyl alcohol copolymer resin is 1 to 50% by weight and preferably 10 to 45% by weight. If the ethylene content is more than 50% by weight, although heat sealability is improved, the adsorption of the flavor component is increased, unsuitably for the objects of the present invention. On the contrary, if it is less than 1% by weight, melt moldability is poor and it cannot be used. Moreover the vinyl acetate unit content is preferably 1 to 89% by weight. If it is less than 1% by weight, melt moldability is decreased, and if it is more than 89% by weight, the adsorption of the flavor is increased.

In this polyvinyl alcohol copolymer resin, not more than 10% by weight of a monomer having an ethylenically unsaturated bond can be copolymerized. Examples of such monomers are unsaturated acids such as acrylic acid, methacrylic acid, crotonic acid, maleic acid and itaconic acid, or their alkyl esters, and α-olefins such as propylene, butene, decene and octadecene.

On the other hand, the types of thermoplastic resin to be laminated on the polyvinyl alcohol copolymer

11

resin layer are not limited, and the aforementioned ones listed as the thermoplastic resin usable in the multi-layer laminate using the resin composition of the present invention can be used. As the laminating method, as described above, it is carried out by the so-called dry lamination method or sandwiched lamination method using a poly urethane or poly acrylate adhesive for dry lamination. There are also other various methods such as a coextrusion lamination method, a coextrusion method (feed block method, multi manifold method), a coinjection molding method, a pipe coextrusion method, and a solution coating method in which a polyvinyl alcohol copolymer resin is dissolved in a solvent and then coated. In the coextrusion method, when a laminate of the polyvinyl alcohol copolymer resin and the polyolefinic resin (polyethylene, an ethylene-vinyl acetate copolymer, a polyoletinic ionomer resin, a polyethylenic terpolymer, and the like) is produced, lamination can be carried out without an adhesive layer. In order to obtain a higher inter-layer adhesion strength, an acid anhydride modified polyolefinic resin, which are usually employed in adhesion of an etylene-vinyl alcohol resin, or other types of moldified polyolefinic resin may be used as the adhesive resin layer. As the adhesive resin layer, so-called dry lamination adhesives such as poly urethane, poly acrylate and polyester ones, and adhesive resins known for the coextrusion method can be utilized. For example, as the adhesive resin layer, there are resins resulting from graft or copolymerization of unsaturated carboxylic acid, acid anhydride or an ester monomer to the polyolefinic resin. As the graft method in this case, there is a method in which the polyolefinic resin is modified by melt grafting the polyolefinic resin with the above component(s) using an organic peroxide compound, or a method in which the polyolefinic resin is dissolved in heated xylene and the above component is grafted with the organic peroxide compound, and the like. As the unsaturated carboxylic acid, acid anhydride, and ester monomer, methacrylic acid, acrylic acid, ethacrylic acid, glycidyl methacrylate, 2-hydroxyethyl acrylate, 2-hydroxyethyl methacrylate, diethyl maleate, monoethyl maleate, di-n-butyl maleate, maleic acid, maleic anhydride, fumaric anhydride, itaconic acid, itaconic anhydride, 5-norbornene-2,3-anhydride, citraconic acid, citraconic anhydride, crotonic acid, crotonic anhydride, acrylonitrile, methacrylonitrile, sodium acrylate, calcium acrylate, magnesium acrylate, and the like can be listed. These graft polymers are described in U.S. Patents 4026967, 3953655, Japanese Patent Application Laid-Open Nos. 98784/1976, Japanese Patent Publication No. 15423/1969 and 4822/1974.

Examples of the layer structure of the multi-layer laminate in which the polyvinyl alcohol copolymer resin layer is the heat seal layer are, assuming that the polyvinyl alcohol copolymer resin layer is (a) layer, the adhesive resin layer is (b) layer, and the other thermoplastic resin layer is (c), (a) layer/(c) layer, (a) layer/(c) layer/(b) layer/(c) layer, (a) layer/(b) layer/(c) layer/(c) layer, (a) layer/(b) layer/(c) layer, and (a) layer/(b) layer/metal foil/(c) layer. Depending on physical properties required, a combination of resins used can be chosen appropriately. Assuming that the polyolefinic resin or its modified product is PO, the polystyrene resin is PS, the polyethylene terephthalate resin is PET, biaxially stretched polypropylene is OPP, polyvinyl chloride is PVC, the polycarbonate resin is PC, and the polyamide resin is NY, more specific examples of the layer structure are (a) layer/PO layer, (b) layer/PET layer, (a) layer/PO layer/(b) layer/NY layer, (a) layer/PO layer/(b) layer/PS layer, (a) layer/PO layer/(b) layer/PVC layer, (a) layer/PO layer/(b) layer/PC layer, (a) layer/PO layer/(b) layer/OPP layer, (a) layer/(b) layer/PET layer, (a) layer/(b) layer/NY layer, (a) layer/(b) layer/PS layer, (a) layer/(b) layer/PVC layer, (a) layer/(b) layer/PC layer, (a) layer/(b) layer/OPP layer, (a) layer/(b) layer/NY layer/(b) layer/PET layer, (a) layer/(b) layer/NY layer/(b) layer/PC layer, (a) layer/(b) layer/PET layer/PO layer, (a) layer/(b) layer/NY layer/PO layer, (a) layer/(b) layer/PS layer/NY layer, (a) layer/(b) layer/PVC layer/PO layer, and (a) layer/(b) layer/PC layer/PO layer.

An ethylene-vinyl alcohol copolymer, polyvinylidene chloride copolymer, an acrylonitrile copolymer, a metal foil such as an aluminum foil and the like which are gas barrier materials may be laminated as intermediate layers.

In the layer structure of the multi-layer laminate, it is essential that the (a) layer is the outermost layer and in wrapping an article, is used as the heat seal layer, i.e., the innermost layer of the packaging material, but other conditions are not critical.

By the above layer structure, there can be obtained a multi-layer laminate which is excellent in flavor barrier properties and the like. Although the reason for that is not clear, it is said that, in general, the gas barrier properties of a resin having a hydroxyl group, such as a polyvinyl alcohol copolymer resin depend on the rate of diffusion of gas molecule in the resin, and if the resin contains water as a result of moisture absorption, bonding force between polymer chains is weakened, and along with an increase in mobility between polymer chains, the rate of diffusion of gas molecule is increased. In connection with flavor sorption, compatibility between the polyvinyl alcohol copolymer resin and the flavor component molecule greatly contributes thereto, and it is considered due to the fact that within the flavor component molecule which can be recognized as flavor, there exists no molecule showing great sorption properties. The sorption as used herein refers to the phenomenon that a low molecular weight organic compound dissolves and diffuses into a solid such as the polymer. On the other hand, with regard to heat sealability, side chains of a copolymer such as the ethylene-vinyl alcohol copolymer are all hydroxyl groups and hydroxyl groups adjacent to each other take a hydrogen bond, and further the most are hydroxyl groups, i.e., the vinyl alcohol component, and thus it is brittle and is difficult to melt, and thus the heat sealability is poor. On the other hand, since it is expected that in the polyvinyl alcohol copolymer resin to be used in the present invention, the ethylene-vinyl acetate copolymer is grafted onto the polyvinyl alcohol, it is considered that it is easily meltable at the time of heat sealing and heat sealed portions are firmly bonded.

The above multi-layer laminate with the polyvinyl alcohol copolymer resin layer as the heat seal layer is excellent in the flavor barrier properties and thus is suitable as a wrapping material for various foods such as drinks such as juice and coffee, and retort foods such as curry and soup.

In general, for packaging of foods, a polyolefinic resin has heretofore been used as the heat seal layer, but the flavor component of the contents is dissolved in or diffuses in the polyolefin resin constituting the parts in contact with the contents. This sorption phenomenon sometimes leads to the loss of the flavor from the contents.

However, as a result of the present inventors' investigation, it has been found that if a polyolefinic thermoplastic resin layer is laminated in a thickness of 2 to 30 μm in adjacent to the polyvinyl alcohol copolymer resin layer, even if the polyolefinic thermoplastic resin layer is used as the heat seal layer, there is obtained a multi-layer laminate which is excellent in flavor barrier properties, heat sealability and mechanical strength.

That is, the present invention further provides a multi-layer laminate which has at least one layer of a polyvinyl alcohol copolymer resin as described above, and in which adjacent to the resin layer, a 2 to 30 μm thick polyolefinc thermoplastic resin layer, or an adhesive layer and the polyolefinic thermoplastic resin layer are laminated, and the polyolefinic thermoplastic resin layer is made a heat seal layer.

As the polyolefinic thermoplastic resin as the heat seal layer which is to be laminated on the polyvinyl alcohol copolymer resin layer, polyolefinic resins such as a polyethylene resin, a polypropylene resin, a polybutene resin, a 4-methylpentene-1 resin, EVA, a copolymer resin of ethylene and α-olefin having 3 to 12 carbon atoms, and the like, or their modified products, or their blends can be used.

Examples of the copolymer resin of ethylene and α-olefin having 3 to 12 carbon atoms are an ethylene-butene-1 copolymer, an ethylene-4-methylpentene-1 copolymer, an ethylene-hexene-1 copolymer, and the like. In addition, modified polypropylene, modified polybutene and modified poly-4-methylpentene-1 as obtained by blending with an ethylene-propylene rubber, or those as obtained by grafting unsaturated carboxylic acid or its anhydride onto the above described polyolefinic polymer in the presence of an organic peroxide, or those as obtained by copolymerizing with other monomers (e.g., methyl methacrylate, ethyl acrylate, etc.) are included as the polyolefinic resin to be used in the present invention.

If the polyolefinic thermoplastic resin layer is laminated in a thickness of 2 to 30 μm on the polyvinyl alcohol copolymer resin layer according to the present invention, when the polyolefinic thermoplastic resin layer is used as a heat seal layer, there is obtained a multi-layer laminate which is excellent in various characteristics such as resistance to contents, flavor barrier properties, heat sealability, and mechanical strength.

In the multi-layer laminate of the present invention, if the total thickness of the polyolefinic thermoplastic resin layer to be used as the heat seal layer and the adhesive layer is less than 2 μm, the extrusion is difficult, and if it is more than 30 μm, the amount of sorption of the flavor component is undesirably increased. Preferably the laminate is produced so that the total thickness of the polyolefinic thermoplastic resin, or this resin layer and the adhesive layer is within the range of 5 μm to 20 μm.

On the other hand, in connection with the thickness of the polyvinyl alcohol copolymer resin, there are no special limitations, and taking economic points and the like into consideration, it is preferably not more than 50 μm.

A method of production of the multi-layer laminate is the same as the method explained in connection with the production of the above multi-layer laminate with the polyvinyl alcohol copolymer resin layer as the heat seal layer. In the dry lamination method, however, the thickness is preferably not less than 10 μm because if the thickness of the polyolefinic thermoplastic resin film is too small, breakage of the film or formation of wrinkles is caused during the dry lamination.

When the polyolefinic resin is laminated on the polyvinyl alcohol copolymer resin in the coextrusion method, the lamination can be carried out without the adhesive layer, but in order to obtain a higher interlayer adhesive strength, usually, unsaturated carboxylic acid- or their anhydride - modified polyolefinic resins used in adhesion of an ethylene-vinyl alcohol resin and the like, or adhesives for dry lamination, such as poly-urethane, poly acrylate and polyester adhesives, may be used as the adhesive resin layer. When the adhesive resin layer is used, it is necessary that the total thickness of the polyolefinic thermoplastic resin layer and the adhesive resin layer is within the range of 2 to 30 μm.

As examples of the multi-layer laminate with the polyolefinic thermoplastic resin layer as the heat seal layer, assuming that the polyvinyl alcohol copolymer layer is indicated by (a) layer, the adhesive resin layer, by (b) layer, the polyolefinic thermoplastic resin layer, by (d) layer, and the other thermoplastic resin layer, by (e) layer, (d) layer/(a) layer, (d) layer/(b) layer/(a) layer, (d) layer/(a) layer/(b) layer/(e) layer, (d) layer/(a) layer/metal foil/(e) layer, (d) layer/(b) layer/(a) layer/metal foil/(e) layer, and the like can be listed.

An ethylene-vinyl alcohol copolymer, a polyvinylidene chloride copolymer, an acrylonitrile copolymer, a metal foil such as an aluminum foil, or the like which is a gas barrier material may be laminated as the intermediate layer.

Since the polyvinyl alcohol copolymer resin to be used in the multi-layer laminate of the present invention is, as described above, excellent in the flavor barrier properties and the heat sealability, it is considered that even if the polyolefinic resin layer is made thin to an extent that the flavor sorption phenomenon is neglected, and is exposed to severe heat seal conditions, and a part of the polyolefinic resin flows and its layer is lost, the heat seal part is firmly bonded by the heat seal performance of the polyvinyl alcohol copolymer resin layer itself which is an adjacent layer.

Next, the present invention is described in greater detail with reference to the examples.

Example of Production of Polyvinyl Alcohol Copolymer Resin

A 30-liter volume autoclave was used, and PVA205 (trade name) produced by Kuraray Co., Ltd., which was a partially saponified polyvinyl alcohol resin having a degree of polymerization of 500 and a degree of saponification of 88 mol%, was used. While adding ammonium persulfate and sodium meta-hydrogensulfite as catalysts, PVA and vinyl acetate were fed in a varied ratio such that the concentration ratio of PVA to vinyl acetate was 5/95, 10/90, 25/75 or 50/50 (by weight), and then emulsion polymerization was conducted under a varied pressure of ethylene gas to obtain a polyvinyl alcohol copolymer resin (emulsion). The solid concentration of the polymerized emulsion was about 20 to 60% by weight. This emulsion was freeze precipitated by allowing to stand at -20°C for 20 hours to obtain a polymer (polyvinyl alcohol copolymer resin).

Then the polymer obtained was freeze ground and freeze dried, and then vacuum dried at a temperature of 80°C. The ethylene content of the polymer was determined by the alkali saponification method. The ethylene content of the polyvinyl alcohol copolymer resin thus obtained is shown in Table 1.

## Table 1

| Resin | PVA/Vinyl Acetate | Ethylene Content (wt%) |
|-------|-------------------|------------------------|
| I     | 5/95              | 17                     |
| II    | 10/90             | 17                     |
| III   | 25/75             | 17                     |
| IV    | 25/75             | 0                      |
| V     | 25/75             | 52                     |
| VI    | 50/50             | 17                     |
| VII   | 50/50             | 15                     |
| VIII  | 5/95              | 15                     |
| IX    | 25/75             | 38                     |

Examples 1 to 15 and Comparative Examples 1 to 14

(Preparation of Polyvinyl Alcohol Copolymer Resin Composition and Polyvinyl Alcohol Resin)

Laboplastmill Model ME manufactured by Toyo Seiki Seisakujo Co., Ltd. was used, and at a temperature of 220 °C, the polyvinyl alcohol copolymer resins obtained in the above preparation example and polyvinyl alcohol resins were mixed to obtain the resin compositions shown in Tables 2 and 3.

The resin compositions as prepared above were measured for MFR at a temperature of 230 °C by the use of a melt indexer manufactured by Takara Kogyo Co., Ltd. according to JIS-K 6758. The above resin compositions were press molded at a temperature of 230 °C to produce 100 μm thick films, and at the same time, extrusion processability was evaluated by MFR. For this film, an amount of oxygen permeated was measured by the use of OXTRAN-10/50A manufactured by Modern Control Corp., and a tensile modulus was measured according to ASTM-D638. These results are shown in Tables 2 and 3.

Table 2

| No. | Polyvinyl Alcohol Resin | | Polyvinyl Alcohol Copolymer Resin | | Amount of Permeated Oxygen (cc/m² · 65 day·atm) | | 230°C MFR (g/10 min) | Tensile Modulus (x 10⁻⁴) (kg/cm²) |
| | Type | Compounding Ratio (wt%) | Type | Compounding Ratio (wt%) | 23°C, 65RH% | 23°C, 90RH% | | |
|---|---|---|---|---|---|---|---|---|
| Comparative Example 1 | (a) | 50 | I | 50 | 89.0 | 106 | 1.0 | 0.18 |
| Comparative Example 2 | (b) | 50 | I | 50 | 85.2 | 102 | 0.7 | 0.22 |
| Comparative Example 3 | (a) | 50 | IV | 50 | No formation of film | No formation of film | Impossible to extrude | No formation of film |
| Comparative Example 4 | (b) | 50 | IV | 50 | No formation of film | No formation of film | Impossible to extrude | No formation of film |
| Comparative Example 5 | (a) | 50 | V | 50 | 222 | 302 | 2.4 | 1.70 |
| Example 1 | (a) | 50 | II | 50 | 0.52 | 2.13 | 4.8 | 0.85 |
| Example 2 | (b) | 50 | II | 50 | 0.56 | 2.32 | 3.5 | 0.93 |
| Example 3 | (c) | 50 | VI | 50 | 0.38 | 1.58 | 2.1 | 1.65 |
| Example 4 | (a) | 50 | III | 50 | 0.46 | 1.97 | 3.8 | 1.21 |
| Example 5 | (a) | 50 | VI | 50 | 0.32 | 1.37 | 1.9 | 1.50 |
| Example 6 | (a) | 17 | VI | 83 | 0.96 | 4.1 | 2.6 | 1.1 |
| Comparative Example 6 | (a) | 4 | VI | 95 | 1.9 | 16.3 | 4.6 | 0.75 |
| Comparative Example 7 | (a) | 2 | VI | 98 | 2.6 | 21.3 | 5.1 | 0.68 |
| Example 7 | (a) | 17 | III | 83 | 1.15 | 4.72 | 3.6 | 1.0 |
| Example 8 | (a) | 60 | VI | 40 | 0.24 | 0.89 | 1.5 | 1.74 |

Polyvinyl alcohol resin (a): degree of polymerization = 300, degree of saponification = 88 mol%
Polyvinyl alcohol resin (b): degree of polymerization = 1,700, degree of saponification = 88 mol%
Polyvinyl alcohol resin (c): degree of polymerization = 2,400, degree of saponification = 98.5 mol%

EP 0 454 850 A1

Table 3

| No. | Polyvinyl Alcohol Resin | | Polyvinyl Alcohol Copolymer Resin | | 230°C MFR (g/10 min) |
|---|---|---|---|---|---|
| | Type | wt% | Type | wt% | |
| Comparative Example 8 | — | — | VII | 100 | 3.1 |
| Comparative Example 9 | (a) | 100 | — | — | not less than 50 |
| Comparative Example 10 | (d) | 100 | — | — | impossible to extrude |
| Comparative Example 11 | (e) | 100 | — | — | impossible to extrude |
| Comparative Example 12 | (a) | 17 | IV | 83 | 4.1 |
| Example 9 | (a) | 17 | VII | 83 | 5.1 |
| Example 10 | (a) | 35 | VII | 65 | 10.7 |
| Example 11 | (a) | 50 | VII | 50 | 21.4 |
| Example 12 | (a) | 75 | VII | 25 | 50.1 |
| Example 13 | (a) | 84 | VII | 16 | 53.6 |
| Example 14 | (d) | 50 | VII | 50 | 10.1 |
| Example 15 | (e) | 50 | VII | 50 | 2.4 |
| Comparative Example 13 | (d) | 98 | VII | 2 | impossible to extrude |
| Comparative Example 14 | (a) | 2 | VII | 98 | 3.9 |

Polyvinyl alcohol resin (a): degree of polymerization 300, degree of saponification 88 mol%

Polyvinyl alcohol resin (d): degree of polymerization 500, degree of saponification 99.3 mol%

Polyvinyl alcohol resin (e): degree of polymerization 2,400, degree of saponification 88.5 mol%

Examples 16 to 18

(Preparation of Polyvinyl Alcohol Copolymer Emulsion)

A 30-liter autoclave equipped with a stirrer, several inlets, a cooling and heating apparatus, a pressure indicator and a thermometer was charged with 7,000 g of an aqueous polyvinyl alcohol solution as prepared by dissolving 700 g of GL-03 (trade name) produced by Nippon Gohsei Kagaku Co., Ltd., which was partially saponified polyvinyl alcohol having a degree of polymerization of 300 and a degree of saponification of 88 mol% and 700 g of GL-05 (trade name) produced by Nippon Gohsei Kagaku Co., Ltd., which was partially saponified polyvinyl alcohol having a degree of polymerization of 500 and a degree of saponification of 88 mol% in 5,600 g of water, and 400 g of an aqueous solution with 20 g of sodium acetate dissolved therein, and further with 8,600 g of vinyl acetate. An operation of supplying ethylene under a pressure of 5 kg/cm² to return to atmospheric pressure was repeated twice to conduct ethylene replacement. Then, the ethylene pressure was maintained at 50 kg/cm², and 2,000 g of a 2% aqueous solution of ammonium persulfate and 2,000 g of a 5% aqueous solution of sodium metasulfite as catalysts were uniformly added over 5 hours to conduct the reaction. During this time, the reaction temperature was maintained at 60°C to conduct polymerization. Thereafter, the reaction mixture was aged by maintaining it

17

at 80°C for 2 hours.

As a result, a polyvinyl alcohol-vinyl acetate-ethylene copolymer emulsion having a solid concentration of 54.78% and a viscosity of 8,000 cps was obtained.

(Preparation of Aqueous Polyvinyl Alcohol Solution)

Polyvinyl alcohol GL-03 was dissolved in water at 70°C to obtain a 30 wt% aqueous solution having a viscosity of 2,700 cps at 23°C, and this was mixed in a necessary amount. (Mixing of Polyvinyl Alcohol Copolymer Emulsion and Aqueous Polyvinyl Alcohol Solution)

The polyvinyl alcohol copolymer emulsion as prepared above and an aqueous polyvinyl alcohol solution were mixed in a varied ratio, and this mixed emulsion was allowed to stand at -20°C for 20 hours and the resin freeze precipitated was then freeze ground, freeze dried and then vacuum dried at 80°C for 24 hours to obtain a resin shown in Table 4.

Example 19

To the polyvinyl alcohol copolymer emulsions obtained in Examples 16 to 18 was added an aqueous solution of PVA117 (trade name) produced by Kuraray Co., Ltd., which was polyvinyl alcohol having a degree of polymerization of 1,700 and a degree of saponification of 98.5 mol%, in the same manner as in Example 17 so that the sum of the polyvinyl alcohol groups (that is, polyvinyl alcohol and groups derived from polyvinyl alcohol) was 50 wt% based on the total weight of the polyvinyl alcohol groups and the vinyl acetate, and then they were mixed in the same manner as in Example 16 to obtain a resin composition.

Example 20

The 30-liter autoclave used in Example 16 was charged with 7,500 g of an aqueous solution as obtained by dissolving 1,400 g of GM-14L (trade name) produced by Nippon Gohsei Kagaku Co., Ltd., which was partially saponified polyvinyl alcohol having a degree of polymerization of 1,400 and a degree of saponification of 88 mol%, in 6,100 g of water, and 20 g of sodium acetate. In the same manner as in Example 16, an operation of applying ethylene under a pressure of 5 kg/cm² and then returning to atmospheric pressure was repeated twice to conduct ethylene replacement. The reaction was conducted by maintaining the ethylene pressure at 50 kg/cm², and 8,600 g of vinyl acetate, and 1,500 g of a 2% aqueous solution of ammonium persulfate and 1,500 g of a 5% aqueous solution of sodium metasulfite as catalysts were uniformly added over 5 hours. During this time, the reaction temperature was maintained at 70°C to polymerize. Thereafter, the reaction mixture was aged by maintaining at 80°C for 2 hours.

As a result, a polyvinyl alcohol-vinyl acetate-ethylene copolymer emulsion having a solid concentration of 44.93% and a viscosity of 28,000 cps was obtained.

This emulsion was mixed with the aqueous polyvinyl alcohol solution used in Examples 16 to 18 in the same manner as in Example 17 to obtain a resin composition.

The results of measurement of the amount of permeated oxygen and the MFR for the melt extrusion processability are shown in Table 5.

Example 21

In Examples 16 to 18, the procedure of Example 16 was repeated with the exception that the polyvinyl alcohol was changed from a mixture of GL-03 and GL-05 to only GL-05, its amount was changed to 1,000 g, and the amount of vinyl acetate was changed to 9,000 g.

As a result, a polyvinyl alcohol copolymer emulsion having a solid concentration of 54.82% and a viscosity of 8,500 cps was obtained.

This emulsion was mixed with the aqueous polyvinyl alcohol solution used in Examples 16 to 18 so that the sum of the polyvinyl alcohol groups was 15% by weight based on the total weight of the polyvinyl alcohol groups and the vinyl acetate to obtain a resin composition.

The results of measurement of the amount of permeated oxygen and MFR for the melt extrusion processability are shown in Table 5.

Example 22

The 30-liter autoclave used in Example 16 was charged with 5,600 g of an aqueous solution prepared by dissolving 280 g of polyvinyl alcohol GL-03 and 280 g of GL-05 in 5,040 g of water, and 6,960 g of an aqueous solution obtained by dissolving 20 g of sodium acetate, and in the same manner as in Example 16, an operation of applying ethylene under a pressure of 5 kg/cm² and then returning to atmospheric pressure was repeated twice to conduct ethylene replacement. The reaction was conducted by maintaining the ethylene pressure at 50 kg/cm². Then 3,440 g of vinyl acetate, 2,000 g of a 2% aqueous solution of ammonia and 2,000 g of a 5% aqueous solution of sodium metasulfite as catalysts were uniformly added over 5 hours. During this time, polymerization was conducted by maintaining the reaction temperature at 60°C. Thereafter, the reaction mixture was aged by maintaining at 80°C for 2 hours.

As a result, a polyvinyl alcohol-vinyl acetate-ethylene copolymer emulsion having a solid concentration of 24.07% and a viscosity of 200 cps was obtained.

To this emulsion was added the aqueous polyvinyl alcohol solution used in Example 16 in the same manner as in Example 17 so that the sum of the polyvinyl alcohol groups was 50% by weight based on the total weight of the polyvinyl alcohol groups and the vinyl acetate. Thereafter the same procedure as in Example 17 was repeated to obtain a resin composition, and this resin composition was measured in the same manner as in Example 17. The results are shown in Table 5.

Comparative Example 15

The 30-liter autoclave used in Example 16 was charged with 5,000 g of an aqueous solution with 500 g of polyvinyl alcohol GL-05 dissolved therein and 1,500 g of an aqueous solution with 20 g of sodium acetate dissolved therein, and ethylene replacement was conducted in the same manner as in Example 16. The reaction was conducted by maintaining the ethylene pressure at 50 kg/cm². Then 9,500 g of vinyl acetate, and 2,000 g of a 2% aqueous solution of ammonium persulfate and 2,000 g of a 5% aqueous solution of sodium metasulfite as catalysts were uniformly added over 5 hours. During this time, the reaction temperature was maintained at 60°C to polymerize. Thereafter, the reaction mixture was aged by maintaining at 80°C for 2 hours.

As a result, a polyvinyl alcohol-vinyl acetate-ethylene copolymer having a solid concentration of 54.6% and a viscosity of 2,300 cps was obtained.

To this emulsion was added the aqueous polyvinyl alcohol solution used in Example 16 in the same manner as in Example 16 so that the sum of the polyvinyl alcohol groups was 10% by weight based on the total weight of the polyvinyl alcohol groups and the vinyl acetate, and they were mixed. Thereafter, the procedure of Example 16 was repeated to obtain a resin composition, and this resin composition was measured in the same manner as in Example 16. The results are shown in Table 5.

Comparative Example 16

The procedure of Example 16 was repeated with the exception that Polyvinyl Alcohol GH-17 (trade name) produced by Nippon Gohsei Kagaku Co., Ltd., which was partially saponified polyvinyl alcohol having a degree of polymerization of 1,700 and a degree of saponification of 88 mol%, was used in place of the mixture of Polyvinyl Alcohol GL-03 and GL-05. When the vinyl acetate, and ammonium persulfate and sodium metahydrogensulfite as catalysts were started to uniformly add so that the addition was completed in 5 hours, it became impossible to control the temperature in 3 hours because the mixture became too viscous, and thus the reaction was stopped.

Comparative Example 17

In place of the mixture of Polyvinyl Alcohol GL-03 and GL-05 used in Example 16, 8,300 g of an aqueous polyvinyl alcohol solution prepared by dissolving 2,500 g of GM-14L in 5,800 g of water and 200 g of an aqueous solution with 20 g of sodium acetate dissolved therein were charged, and after ethylene replacement, the reaction was conducted by maintaining the ethylene pressure at 50 kg/cm². Then 7,500 g of vinyl acetate, and 500 g of a 8% aqueous solution of ammonium persulfate and 1,000 g of a 10% aqueous solution of sodium metasulfite as catalysts were attempted to uniformly add in 5 hours. However, in 3.5 hours after the start of addition, temperature control became impossible because of high viscosity.

EP 0 454 850 A1

Table 4

| | Polyvinyl Alcohol Copolymer Emulsion | | | | | |
| Example No. | Polyvinyl Alcohol PVA(1) (g) | Vinyl Acetate VAc (g) | $\frac{PVA(1)}{PVA(1)+VAc}$ (%) | Concentration (%) | Viscosity (cps) | Ethylene Content (%) |
|---|---|---|---|---|---|---|
| Example 16 | GL-03: 700 GL-05: 700 | 8,600 | 14 | 54.78 | 8,000 | 17 |
| Example 17 | GL-03: 700 GL-05: 700 | 8,600 | 14 | 54.78 | 8,000 | 17 |
| Example 18 | GL-03: 700 GL-05: 700 | 8,600 | 14 | 54.78 | 8,000 | 17 |
| Example 19 | GL-03: 700 GL-05: 700 | 8,600 | 14 | 54.78 | 8,000 | 17 |
| Example 20 | GM-14L:1400 | 8,600 | 14 | 44.93 | 28,000 | 18.5 |
| Example 21 | GL-05: 1000 | 9,000 | 10 | 54.82 | 8,500 | 16.5 |
| Example 22 | GL-03: 280 GL-05: 280 | 3,440 | 14 | 24.07 | 200 | 20 |
| Comparative Example 15 | GL-05: 500 | 9,500 | 5 | 54.60 | 2,300 | 15 |
| Comparative Example 16 | GH-17: 1400 | 8,600 | 14 | — | — | — |
| Comparative Example 17 | GM-14L:2500 | 7,500 | 25 | — | — | — |

EP 0 454 850 A1

Table 4 (contonued)

| Example No. | Aqueous Polyvinyl Alcohol Solution | Mixed Resin |
| | Polyvinyl Aloohol PVA(2) (g) | $\dfrac{\text{PVA}(1)+\text{PVA}(2)}{\text{PVA}(1)+(2)+\text{VAc}}$ (%) |
| --- | --- | --- |
| Example 16 | GL-03: 1,470 | 25 |
| Example 17 | GL-03: 7,200 | 50 |
| Example 18 | GL-03:24,000 | 75 |
| Example 19 | PVA117: 7,200 | 50 |
| Example 20 | GL-03: 7,200 | 50 |
| Example 21 | GL-03:    590 | 15 |
| Example 22 | GL-03: 2,800 | 50 |
| Comparative Example 15 | GL-03:    550 | 10 |
| Comparative Example 16 | — | — |
| Comparative Example 17 | — | — |

## Table 5

| Example & Com. Ex. No. | Amount of Permeated Oxygen $\frac{cc \cdot 100 \ \mu m}{m^2 \cdot day \cdot atm}$ | Melt Extrusion Processability MFR 230°C (g/10 min) |
|---|---|---|
| Example 16 | 0.42 | 3.1 |
| Example 17 | 0.07 | 6.5 |
| Example 18 | 0.02 | 8.0 |
| Example 19 | 0.36 | 1.8 |
| Example 20 | 0.09 | 4.8 |
| Example 21 | 1.14 | 2.6 |
| Example 22 | 0.08 | 5.8 |
| Comparative Example 15 | 36.7 | 5.6 |
| Comparative Example 16 | Impossible to polymerize | Impossible to polymerize |
| Comparative Example 17 | Impossible to polymerize | Impossible to polymerize |

\* Com. Ex. means Comparative Example.

Example 23

The emulsion resin composition obtained in Example 16 was coated on a 50 $\mu$m think polyester film (produced by Du'pont Corp.) in a thickness of 20 $\mu$m and drided at room temperature for one week. Then the polyester film was peeled apart to obtain a dried emulsion resin composition film. The oxygen permeation rate of the film was measured and found to be 2.3 cc/m$^2$·day·atm.

Example 24

A film was obtained in the same manner as in Example 23 except that the emulsion resin composition obtained in Example 18 was used. The oxygen permeation rate of the film was 0.15 cc/m$^2$·day·atm.

Comparative Example 18

300 g of polyoxyethylenenonylphenylether (Emulgen 950 produced by Kao Atlus Co., Ltd.) and 300 g of /sodium polyoxyethylenealkylphenylethersulfate, 100 g of hydroxyethylcellulose AL-15 (produced by Fuji Chemical Co., Ltd.) and 80 g of sodium polyphosphate were dissolved in 8,700 g of water and charged in a 30-liter autoclave, and replacement was carried out with ethylene under a pressure of 5 kg/cm$^2$. This operation was repeated twice.

8,600 g of vinyl acetate and 2,000 g of a 2% aqueous solution of ammonium persulfate as a catalyst were uniformly added in 5 hours. During this time, polymerization was conducted by maintaining the ethylene pressure at 40 kg/cm$^2$ and the temperature at 75°C, and the reaction mixture was aged by maintaining at 80°C for 2 hours.

As a result, an ethylene-vinyl acetate copolymer emulsion having a solid concentration of 51.55% and a viscosity of 8,200 cps was obtained.

The ethylene content as determined by the alkali saponification method was 18% by weight.

Using this emulsion, an ethylene-vinyl acetate resin film was obtained in the same manner as in Example 23. The oxygen permeation rate of the film was 2,000 cc/cm$^2$•day•atm.

Comparative Example 19

A film was obtained in the same manner as in Example 23 except that the emulsion resin composition obtained in Comparative Example 15 was used. The oxygen permeation rate of the film was 1,850 cc/cm$^2$•day•atm.

Examples 25 to 31 and Comparative Examples 20 to 25

(Composition of Polyvinyl Alcohol Copolymer Resin and Polyamide Resin)

By the use of Laboplast Mill Model ME manufactured by Toyo Seiki Seisakujo Co., Ltd., at a temperature of 230°C, 100 parts by weight of the polyamide resin was mixed with the polyvinyl alcohol copolymer resin (PVA copolymer resin) obtained in the above preparation example in a predetermined ratio to obtain a resin composition.

The resin composition as prepared above was press molded at a temperature of 230°C to produce a 100 μm thick film. For this film, the oxygen permeation amount was measured by the use of OXTRAN-10/50A manufactured by Modern Control Corp., and the film impact strength, by the use of a swing type film impact tester manufactured by Toyo Seiki Seisakujo Co., Lt. These results are shown in Table 6.

Table 6

| Example No. | Type of Polyamide Resin | PVA Copolymer Resin Type | Compounding Amount (parts by weight) | Amount of Permeated Oxygen ($cc/m^2 \cdot day \cdot atm$) 23°C, 65RH% | Film Impact (kg-cm) |
|---|---|---|---|---|---|
| Comparative Example 20 | Nylon 6 | — | 0 | 48.9 | 12.6 |
| Comparative Example 21 | Nylon 12 | — | 0 | 886 | 11.2 |
| Comparative Example 22 | Nylon 6 | I | 50 | 42.1 | 18.6 |
| Comparative Example 23 | Nylon 6 | IV | 50 | no formation of film | — |
| Comparative Example 24 | Nylon 6 | V | 50 | 43.2 | 17.8 |
| Comparative Example 25 | Nylon 6 | VI | 2 | 47.1 | 12.8 |
| Example 25 | Nylon 6 | VI | 10 | 32.1 | 19.7 |
| Example 26 | Nylon 6 | VI | 50 | 26.8 | 21.2 |
| Example 27 | Nylon 6 | VI | 150 | 16.3 | no breakage |
| Example 28 | Nylon 12 | VI | 50 | 416 | 20.4 |
| Example 29 | Nylon 6 | II | 30 | 36.2 | 20.8 |
| Example 30 | Nylon 6 | III | 50 | 33.6 | 21.9 |
| Example 31 | Nylon 12 | III | 100 | 398 | no breakage |

Examples 32 to 40 and Comparative Examples 26 to 32

(Composition of Ethylene-Vinyl Acetate Copolymer Saponified Product and Polyvinyl Alcohol Copolymer Resin)

By the use of Laboplast Mill Model ME manufactured by Toyo Seiki Seisakujo Co., Ltd., at a

24

temperature of 220° C, 100 parts by weight of the ethylene-vinyl acetate copolymer saponified product (EVOH) was mixed with the polyvinyl alcohol copolymer resin (PVA copolymer resin) obtained in the above preparation example, in a predetermined ratio to obtain a resin composition.

The resin composition as obtained above was press molded at a temperature of 230° C to produce a 100 μm thick film. For this film, the amount of permeated oxygen was measured by the use of OXTRAN-10/50A manufactured by Modern Control Co., Ltd., and the film impact strength was measured by the use of a swing type film impact tester manufactured by Toyo Seiki Seisakujo Co., Ltd., and the tensile modlus was measured according to ASTM-D638. These results are shown in Table 7.

EP 0 454 850 A1

Table 7

| Example No. | Type of EVOH | PVA Copolymer Resin | | Amount of Permeated Oxygen $(cc/m^2 \cdot day \cdot atm)$ 23°C, 65 RH% | Tensile Test | |
|---|---|---|---|---|---|---|
| | | Type | Compounding Ratio (parts by weight) | | Strength at Breakage $(kg/cm^2)$ | Elongation (%) |
| Com. Ex. 26 | (a) | — | 0 | 0.11 | 820 | 9 |
| Com. Ex. 27 | (b) | — | 0 | 0.14 | 660 | 9 |
| Com. Ex. 28 | (a) | I | 100 | 183 | 421 | 131 |
| Com. Ex. 29 | (a) | IV | 100 | no formation of film | — | — |
| Com. Ex. 30 | (a) | V | 100 | 15.8 | 680 | 32 |
| Example 32 | (a) | II | 100 | 1.89 | 423 | 33 |
| Example 33 | (a) | III | 100 | 1.15 | 480 | 15 |
| Example 34 | (a) | VI | 100 | 0.43 | 502 | 16 |
| Example 35 | (a) | VI | 50 | 0.37 | 630 | 14 |
| Example 36 | (a) | VI | 500 | 0.73 | 280 | 120 |
| Example 37 | (b) | VI | 50 | 0.41 | 490 | 11 |
| Example 38 | (b) | VI | 100 | 0.54 | 401 | 31 |
| Example 39 | (b) | VI | 500 | 0.81 | 280 | 100 |
| Example 40 | (b) | III | 50 | 0.92 | 430 | 15 |
| Com. Ex. 31 | (a) | VI | 2 | 0.11 | 816 | 9 |
| Com. Ex. 32 | (a) | I | 500 | 359 | 180 | 220 |

Note: (a): Ethylene content 32 mol%,  (b): Ethylene content 44 mol%

Table 7 (contonued)

| Example No. | Impact Strength of Film (kg-cm) | Tensile Modulus (× 10⁴) (kg/cm²) | Existence of Film Gels |
|---|---|---|---|
| Com. Ex. 26 | 45 | 2.0 | none |
| Com. Ex. 27 | 44 | 1.7 | none |
| Com. Ex. 28 | no breakage | 0.52 | present |
| Com. Ex. 29 | — | — | — |
| Com. Ex. 30 | 47 | 1.53 | none |
| Example 32 | 91 | 1.16 | slightyl present |
| Example 33 | 86 | 1.23 | none |
| Example 34 | 82 | 1.32 | none |
| Example 35 | 80 | 1.68 | none |
| Example 36 | 87 | 0.88 | none |
| Example 37 | 58 | 1.31 | none |
| Example 38 | 50 | 1.11 | none |
| Example 39 | 114 | 0.87 | none |
| Example 40 | 67 | 1.03 | none |
| Com. Ex. 31 | 44 | 2.0 | none |
| Com. Ex. 32 | no breakage | 0.45 | present |

Examples 41 to 45 and Comparative Examples 33 to 38

(1) Evaluation of Heat Seal Strength of Polyvinyl Alcohol Copolymer Resin

From a 60 μm thick film of each of the polyvinyl alcohol copolymer resins prepared in the preparation example, a 15 mm wide heat seal evaluation sample was obtained by the use of Heat Seal Tester TP701 manufactured by Tester Sangyo Co., Ltd., under a pressure of 2 kg/cm² for a heat seal time of 1 second at a varied heat seal temperature. The heat seal strength was determined by application of T-type peeling at a peeling speed of 300 mm/min by the use of Tensilon manufactured by Toyo Seiki Co., Ltd. The result is shown in Table 8 as a temperature at which the heat seal strength is at least 400 g/15 mm width.

(2) Evaluation of Sorption of Flavor

27

A 30 μm thick film of the polyvinyl alcohol-based copolymer resin shown in Table 8, a 9 μm thick aluminum foil and a 12 μm thick polyethylene terephthalate film were dry laminated to obtain a multi-layer laminate. Dry lamination was carried out by coating Adhesive AD950A/B produced by Toyo Morton Co., Ltd., in such a manner that the coating amount at the time of drying was 4 g/m$^2$, and after drying, aging was carried out for 4 days in a thermostat chamber maintained at 40°C. The multi-layer laminate obtained was heat sealed so that the polyvinyl alcohol-based copolymer resin was an inner surface, to thereby produce a 18 cm x 10 cm pouch. In this pouch, 300 ml of an aqueous surfactant solution with a flavor component dissolved (0.5% aqueous solution of Ryoto sugar ester SO1170 (trade name), produced by Mitsubishi Kasei Shokuhin Co., Ltd.) was filled and sealed, and it was kept at a constant temperature of 23°C for 50 days. Thereafter, the pouch was opened, and the flavor component sorped on the film of the inner surface of the pouch was extracted with ether. In addition, the flavor component remaining in the aqueous solution was subjected to ether extraction. Then, utilizing gas chromatography, the sorped amount and the remaining amount as calculated as the original aqueous concentration were quantitatively determined for each flavor component. Based on the results obtained, the partition ratio of flavor sorption was calculated according to the following eqution. The partition ratio herein is defined by the equation (1).

Partition ratio = sorped amount/remaining amount     (1)

That is, as the partition ratio is larger, the flavor sorption is larger. When the partition ratio is 1, a half of the flavor contained in the aqueous solution before filling is sorped on the inner surface layer side of the pouch. As the partition ratio is larger than 1, the concentration of the flavor remaining in the aqueous solution is decreased. The results of flavor sorption evaluated as described above are shown in Table 9.

Table 8

| Example No. | Resin | Heat Seal Temperature 500 g/15 mm $\leq$ , °C |
|---|---|---|
| Example 41 | I | $\leq 80$ |
| Example 42 | II | $\leq 80$ |
| Example 43 | III | $\leq 80$ |
| Example 44 | IX | 85 |
| Example 45 | VI | 130 |
| Comparative Example 33 | IV | $\leq 80$ |
| Comparative Example 34 | V | 125 |
| Comparative Example 35 | EVOH-A[1] | —[5] |
| Comparative Example 36 | EVOH-B[2] | 160 |
| Comparative Example 37 | Shoallomer FD 437[3] | 105 |
| Comparative Example 38 | Sholex L-170[4] | 90 |

Note:

[1] Eval EPF 101 produced by Kuraray Co., Ltd., ethylene content 32 mol%

[2] Eval EPG 110 produced by Kuraray Co., Ltd., ethylene content 47 mol%

[3] Polypropylene produced by Showa Denko Kabushiki Kaisha, MFR 9g/10 min

[4] Low density polyethylene produced by Showa Denko Kabushiki Kaisha, MI 7 g/10 min, density 0.917

[5] In Comparative Example 35, a heat seal strength of not less than 400 g is not obtained.

Table 9

| Example No. | Myrcene | d-Limonene | Ethyl n-caproicate | Linalool | n-Octyl Alcohol |
|---|---|---|---|---|---|
| Example 41 | 2.86 | 2.57 | 1.82 | 0.0526 | 0.0236 |
| Example 42 | 1.876 | 1.824 | 0.402 | 0.383 | 0.392 |
| Example 43 | 0.672 | 0.562 | 0.248 | 0.212 | 0.238 |
| Example 44 | 0.421 | 0.434 | 0.193 | 0.173 | 0.206 |
| Example 45 | 0.0923 | 0.0564 | 0.0518 | 0.0384 | 0.0452 |
| Comparative Example 33 | 3.68 | 3.21 | 0.423 | 0.0501 | 0.0436 |
| Comparative Example 34 | 2.63 | 2.37 | 0.204 | 0.0442 | 0.0625 |
| Comparative Example 35 | 0.0110 | 0.00918 | 0.0107 | 0.00554 | 0.0174 |
| Comparative Example 36 | 0.0561 | 0.0212 | 0.0327 | 0.0102 | 0.0154 |
| Comparative Example 37 | 5.26 | 5.30 | 0.260 | 0.0388 | 0.0220 |
| Comparative Example 38 | 8.27 | 9.25 | 0.376 | 0.00554 | 0.0174 |

Examples 46 to 54 and Comparative Examples 39 to 48

Using the polyvinyl alcohol copolymer resin and making the layer thickness to 20 μm, and using a resin composition obtained by mixing linear low density polyethylene (LLDPE, MI 0.8 g/10 min, density 0.918 g/cc) and an unsaturated carboxylic anhydride-modified polyethylene adhesive resin (MI 3.5 g/10 min, density 0.92 g/cc) in a ratio of 1:1, a multi-layer laminate was obtained with a 40 mm ⌀ coextrusion machine (Examples 46 to 50 and Comparative Examples 39 to 43). On the other hand, changing the liner low density polyethylene to polypropylene (MFR 9 g/10 min) and using an unsaturated carboxylic acid anhydride-modified polypropylene adhesive resin (MFR 5.5 g/10 min, density 0.8 g/cc) (Examples 51 to 54 and comparative Examples 44 to 46), changing the polyvinyl alcohol-based copolymer resin to Eval EPG110 (EVOH, ethylene content 47 mol%) produced by Kuraray C., Ltd., changing PP to LLDPE, and using an unsaturated carboxylic acid anhydride-modified polyethylene adhesive resin (MI 3.5 g/10 min, density 0.92 g/cc) for adhesion of the linear low density polyethylene and the ethylene-vinyl alcohol copolymer resin (Comparative Example 47), and changing LLDPE to PP while using EVOH as it is, and using an unsaturated carboxylic acid anhydride modified polypropylene adhesive resin (MFR 9 g/10 min) for adhesion of PP and the ethylene-vinyl alcohol copolymer resin (Comparative Example 48), the multi-layered flat die films shown in Table 10 were obtained. (Evaluation of Heat Seal Strength)

The heat seal strength was evaluated by the same method as in Example 41, and the results are shown in Table 10.

(Evaluation of Flavor Sorption)

On the multi-layer laminate films shown in Table 2, an aluminum foil having a thickness of 9 μm and a polyethylene terephthalate film having a thickness of 12 μm were dry laminated to obtain multi-layer laminates. Dry lamination was carried out by coating Adhesive AD950A/B produced by Toyo Morton Co., Ltd., so that the coated amount in a dry state was 4 g/m², and after drying, aging was carried out for 4 days in a thermostat chamber maintained at 40°C. The multi-layer laminates obtained were heat sealed so that the polyolefinic thermoplastic resin layer was an inner surface, to thereby produce a 18 cm x 10 cm pouch. In this pouch, 300 ml of an aqueous surfactant solution with the flavor component dissolved therein (0.5% aqueous solution of Ryoto sugar ester S-1170, produced by Mitsubishi Kasei Shokuhin Co., Ltd.) was filled and sealed, and kept for 70 days at a constant temperature of 23°C. Thereafter the pouch was opened, and the flavor component sorped on the film at the inner surface of the pouch was extracted with ether and the flavor component remaining in the aqueous solution was extracted with ether. Thereafter, utilizing gas chromatography for each, the adsorped amount and the remaining amount as calculated as the original aqueous solution concentration were quantitatively determined for each flavor component. Based on the results obtained, according to the above formula (1), the partition ratio of flavor sorption was calculated. The results of flavor sorption evaluated as described above are shown in Table 11.

Table 10

| Example No. | A-Layer Constituting Resin | B-Layer Constituting Resin | Thickness of A-Layer (μm) | Heat Seal Strength 500 g/15mm width ≦ , °C |
|---|---|---|---|---|
| Example 46 | LLDPE | II | 5 | ≦100 |
| Example 47 | LLDPE | III | 5 | ≦100 |
| Example 48 | LLDPE | VI | 5 | 130 |
| Example 49 | LLDPE | III | 10 | 130 |
| Example 50 | LLDPE | III | 25 | 120 |
| Example 51 | PP | III | 5 | 105 |
| Example 52 | PP | III | 25 | 110 |
| Example 53 | PP | VI | 5 | 130 |
| Example 54 | PP | VI | 20 | 115 |
| Com. Ex. 39 | LLDPE | I | 5 | ≦100 |
| Com. Ex. 40 | LLDPE | IV | 5 | 135 |
| Com. Ex. 41 | LLDPE | V | 5 | ≦100 |
| Com. Ex. 42 | LLDPE | III | 35 | 125 |
| Com. Ex. 43 | LLDPE | VI | 40 | 130 |
| Com. Ex. 44 | PP | I | 10 | 120 |
| Com. Ex. 45 | PP | III | 40 | 145 |
| Com. Ex. 46 | PP | III | 60 | 150 |
| Com. Ex. 47 | LLDPE | EVOH | 5 | 160 |
| Com. Ex. 48 | PP | EVOH | 5 | 160 |

Table 11

| Example No. | Myrcene | d-Limonene | Ethyl n-Caproicate | Linalool | n-Octyl Alcohol |
|---|---|---|---|---|---|
| Example 46 | 1.628 | 1.736 | 0.52 | 0.45 | 0.51 |
| Example 47 | 0.934 | 0.912 | 0.38 | 0.36 | 0.67 |
| Example 48 | 0.068 | 0.0589 | 0.0667 | 0.092 | 0.241 |
| Example 49 | 0.175 | 0.198 | 0.152 | 0.283 | 0.489 |
| Example 50 | 1.211 | 1.105 | 0.76 | 0.81 | 0.96 |
| Example 51 | 1.103 | 1.021 | 0.437 | 0.49 | 0.71 |
| Example 52 | 1.816 | 1.902 | 0.818 | 0.921 | 1.02 |
| Example 53 | 0.198 | 0.162 | 0.102 | 0.206 | 0.413 |
| Example 54 | 1.342 | 1.201 | 0.82 | 0.92 | 0.89 |
| Com. Ex. 39 | 2.19 | 2.38 | 0.63 | 0.132 | 0.119 |
| Com. Ex. 40 | 2.86 | 2.33 | 1.24 | 0.186 | 0.182 |
| Com. Ex. 41 | 3.84 | 3.68 | 1.98 | 0.229 | 0.288 |
| Com. Ex. 42 | 2.92 | 2.68 | 0.33 | 0.72 | 0.83 |
| Com. Ex. 43 | 2.83 | 2.22 | 0.48 | 0.61 | 0.72 |
| Com. Ex. 44 | 2.05 | 2.07 | 0.52 | 0.72 | 0.108 |
| Com. Ex. 45 | 8.02 | 8.19 | 0.73 | 0.89 | 0.52 |
| Com. Ex. 46 | 11.7 | 11.2 | 0.83 | 0.92 | 0.63 |
| Com. Ex. 47 | 0.018 | 0.013 | 0.02 | 0.001 | 0.019 |
| Com. Ex. 48 | 0.014 | 0.011 | 0.019 | 0.03 | 0.032 |

Industrial Applicability

The composition of the present invention is excellent in melt molding processability, melt extrusion processability, gas barrier properties, mechanical strength and so on, and is effective as a food packaging material, a medicine packaging material, a cosmeotic packaging material, or as various containers required to have gas barrier properties. The multi-layer laminate of the present invention is excellent in flavor barrier properties, heat sealability, mechanical strength and so on, and is effective as a food packaging material, a medicine packaging material, and as other various packaging materials required to have flavor barrier properties, and furthermore metal, paper and the like can be laminated.

## Claims

1. A resin composition comprising:
   (A) a Polyvinyl alcohol copolymer resin having an ethylene content of 1 to 50% by weight, obtained by emulsion polymerization of a vinyl acetate monomer and an ethylene monomer in the state that polyvinyl alcohol is present in an amount of at least 10% by weight based on the total weight of the polyvinyl alcohol and the vinyl acetate monomer; and
   (B) any one of a polyvinyl alcohol resin, a polyamide resin and an olefin-vinyl acetate copolymer saponified product.

2. A resin composition as claimed in Claim 1 wherein the polyvinyl alcohol copolymer resin as the component (A) is obtained by emulsion polymerization of the vinyl acetate monomer and the ethylene monomer in the state that the polyvinyl alcohol is present in an amount of 10 to 60% by weight based on the total weight of the polyvinyl alcohol and the vinyl acetate monomer.

3. A resin composition as claimed in Claim 1 wherein the polyvinyl alcohol copolymer resin as the component (B) comprises a vinyl alcohol unit and a vinyl acetate unit, and has a degree of polymerization of 50 to 2500 and a degree of saponification of at least 50 mol%.

4. A resin composition as claimed in Claim 1, comprising
   (A) a polyvinyl alcohol copolymer resin in an emulsion state and-having a solid concentration of at least 20%, as obtained by controlling the amount of the polyvinyl alcohol to be present in the emulsion polymerization of the vinyl acetate monomer and the ethylene monomer in an amount of 10 to less than 15% by weight based on the total weight of the polyvinyl alcohol and the vinyl acetate monomer; and
   (B) polyvinyl alcohol in an aqueous state, in the amount that the total amount of polyvinyl alcohol and groups derived from polyvinyl alcohol is at least 15% by weight based on the total weight of vinyl alcohol unit and vinyl acetate unit.

5. A resin composition as claimed in Claim 4, prepared by mixing the polyvinyl alcohol copolymer emulsion (A) and the polyvinyl alcohol (B) of Claim 4 to form an emulsion resin composition, and then isolating the resin solid portion.

6. A resin composition as claimed in Claim 4 or 5 wherein the polyvinyl alcohol in the component (A) has a degree of saponification of 70 to 99 mol% and a degree of polymerization of 100 to 3000.

7. A resin composition as claimed in Claim 1 wherein the olefin-vinyl acetate copolymer saponified product has an ethylene content of 15 to 60 mol% and a degree of saponification of at least 90 mol%.

8. A resin composition as claimed in Claim 7 wherein the olefin-vinyl acetate copolymer saponified product has an ethylene content of 25 to 50 mol% and a degree of saponification of at least 96 mol%.

9. A multi-layer laminate having at least one layer of a polyvinyl alcohol copolymer resin having an ethylene content of 1 to 50% by weight, as obtained by emulsion polymerization of a vinyl acetate monomer and an ethylene monomer in the state that the polyvinyl alcohol is present in an amount of at least 10% by weight based on the total weight of the polyvinyl alcohol and the vinyl acetate monomer, wherein at least one thermoplastic resin layer is laminated and the polyvinyl alcohol copolymer resin layer is a heat seal layer.

10. A multi-layer laminate having at least one layer of a polyvinyl alcohol copolymer resin having an ethylene content of 1 to 50% by weight, as obtained by emulsion polymerization of a vinyl acetate monomer and an ethylene monomer in the state that the polyvinyl alcohol is present in an amount of at

34

least 10% by weight based on the total weight of the polyvinyl alcohol and the vinyl acetate monomer, wherein adjacent to the copolymer resin layer, a polyolefinic thermoplastic resin layer having a thickness of 2 μm to 30 μm, or an adhesive layer and the polyolefinic thermoplastic layer, is (are) laminated, and the polyolefinic thermoplastic resin layer is a heat seal layer.

# INTERNATIONAL SEARCH REPORT

International Application No  PCT/JP90/00861

## I. CLASSIFICATION OF SUBJECT MATTER (if several classification symbols apply, indicate all) [4]

According to International Patent Classification (IPC) or to both National Classification and IPC

Int. Cl[5]    C08L23/26, C08L29/04, C08L51/00,
              C08L77/00, B32B27/30

## II. FIELDS SEARCHED

Minimum Documentation Searched [7]

| Classification System : | Classification Symbols |
|---|---|
| IPC | C08L23/26, C08L29/04, C08L51/00, C08L77/00, B32B27/30 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, A, 60-96637 (AIR PRODUCTS & CHEM INC), 30 May 1985 (30. 05. 85) & EP, A, 136717 | 1 - 10 |
| X | JP, A, 63-108016 (Dainippon Ink and Chemicals, Inc.), 12 May 1988 (12. 05. 88), Line 1, upper right column to line 19, lower right column, page 2, line 14, upper right column to line 7, lower left column, page 3 (Family: none) | 1 - 10 |
| A | JP, A, 60-188448 (CHEMPLEX CO), 25 September 1985 (25. 09. 85) & EP, A, 152180 & US, A, 4575532 & US, A, 4600746 & DE, G, 3562014 | 1 - 10 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 14, 1990 (14. 09. 90) | September 25, 1990 (25. 09. 90) |

| International Searching Authority | Signature of Authorized Officer |
|---|---|
| Japanese Patent Office | |

Form PCT/ISA 210 (second sheet) (January 1985)